# FASCICULE DE BREVET EUROPEEN

(11) **EP 2 303 696 B1**
(45) Date de publication et mention de la délivrance du brevet: **28.03.2012**
(21) Numéro de dépôt: 09766014.6
(22) Date de dépôt: 16.06.2009
(51) Int. Cl.: B64D 45/02

(54) **EQUIPEMENT AVIONIQUE COMPRENANT UN SYSTEME DE DRAINAGE D'UN COURANT DE FOUDRE GENERE PAR UNE DECHARGE ORAGEUSE SUR UN AERONEF**
AVIONIKGERÄT MIT EINEM SYSTEM ZUR ABFÜHRUNG EINES DURCH EINE GEWITTERENTLADUNG AUF EIN LUFTFAHRZEUG ERZEUGTEN BLITZSTROMS
AVIONIC EQUIPEMENT COMPRISING A SYSTEM FOR DISSIPATING A LIGHTNING CURRENT GENERATED BY A THUNDERSTORM DISCHARGE ON AN AIRCRAFT

(30) Priorité: 17.06.2008 FR 0853999
(43) Date de publication de la demande: 06.04.2011
(73) Titulaire: AIRBUS OPERATIONS (SAS), 31060 Toulouse (FR)
(72) Inventeur: LE LOUARN, Amélie, F-31480 Le Grès (FR); LABAL, Frédéric, F-31180 Rouffiac-Tolosan (FR)
(74) Mandataire: Marconnet, Sébastien
(86) Numéro de dépôt international: PCT/FR2009/000720
(87) Numéro de publication internationale: WO 2009/153452

(56) Documents cités:
- EP-A- 0 900 647
- EP-A- 1 491 900
- US-A- 3 108 473
- US-A- 4 888 451

## Description

### Domaine de l'invention

L'invention concerne un équipement avionique comportant un système pour drainer un courant de foudre produit par une décharge orageuse sur un aéronef réalisé en matériau composite. L'invention concerne également un procédé d'installation de ce système de drainage.

L'invention trouve des applications dans le domaine de l'aéronautique et, en particulier, dans le domaine de la protection des aéronefs et des équipements installés sur la peau de l'aéronef.

### Etat de la technique

Classiquement, la structure d'un aéronef (fuselage, pointe avant, voilure, etc.) est réalisée à partir de panneaux métalliques montés et fixés autour d'une structure interne également métallique. Ces panneaux métalliques sont assemblés par des fixations également métalliques et forment, une fois assemblés, la peau externe de l'aéronef, appelée aussi peau-avion.

Sur cette peau externe, sont généralement installés des équipements avioniques, appelés aussi équipements électroniques, tels que des sondes anémométriques, des détecteurs de conditions givrantes, des antennes radio, des antennes de navigation, des feux de signalisation, des lampes extérieures, etc. (voir, par exemple, les documents EP1491900 et US3108473). Chacun de ces équipements a un rôle spécifique. Par exemple, les antennes installées sur la peau externe de l'aéronef contribuent au fonctionnement des systèmes radiofréquences et des systèmes de navigation de l'aéronef, les détecteurs de conditions givrantes détectent les conditions climatiques favorisant la création de givre afin d'en informer le poste de pilotage, les sondes anémométriques (prises de pression statique, sondes Pitot, etc.) mesurent des paramètres (de pression, de température, d'angle d'incidence, etc.) afin de donner des informations de navigation au poste de pilotage (altitude, vitesse, etc.)...

Ces équipements doivent être installés en extérieur de l'aéronef. Ils sont montés sur un support métallique, appelé plaque de renfort.

L'installation de ces équipements sur la peau externe de l'aéronef présente différentes contraintes, à savoir :
- des contraintes aérodynamiques qui doivent être respectées pour ne pas perturber les performances des équipements et ne pas créer de traînées parasites ;
- des contraintes de métallisation qui doivent être respectées pour que les dommages de la structure soient acceptables vis-à-vis des exigences de certification et de maintenance (en terme de sécurité, de coût de réparation, de coût d'immobilisation de l'aéronef, etc.) ;
- des contraintes qui sont liées à la protection contre les effets indirects de la foudre pour limiter le transfert de courant de foudre à travers le réseau électrique connecté à ces équipements.

En effet, la probabilité qu'un aéronef prenne la foudre en vol est égale à 1 pour 1000 heures de vol, dans les zones du monde les plus foudroyées. On comprend donc que, pour protéger l'aéronef ainsi que le personnel et les passagers à bord de l'aéronef, il est important de protéger l'ensemble de l'aéronef et des équipements avioniques, des courants de foudre qui pourraient l'endommager.

Pour cela, il est connu, comme pour tout système électrique à protéger de la foudre, de mettre au même potentiel électrique tous les équipements de l'aéronef et de métalliser tous ces équipements aux éléments métalliques dudit aéronef, afin de drainer les courants directs ou indirects de la foudre. On comprend par « métalliser » l'action d'assurer une continuité électrique afin de mettre au même potentiel électrique un ensemble d'éléments.

Dans les aéronefs classiques, c'est-à-dire à structure métallique, la structure métallique présente l'avantage de réaliser une fonction de cage de Faraday lorsque l'avion prend la foudre en vol. On sait, en effet, qu'une cage de Faraday est une enceinte étanche aux champs électriques qui protège l'intérieur de l'enceinte des nuisances électriques. On comprend donc que, lorsque la structure de l'aéronef est métallique et que les équipements avioniques installés en extérieur de cette structure sont également métalliques et fixés sur la structure au moyen d'attaches métalliques, alors la structure de l'aéronef constitue une cage de Faraday. Dans ce type d'aéronefs à structure métallique, la peau externe, elle-même, sert à drainer des courants de foudre.

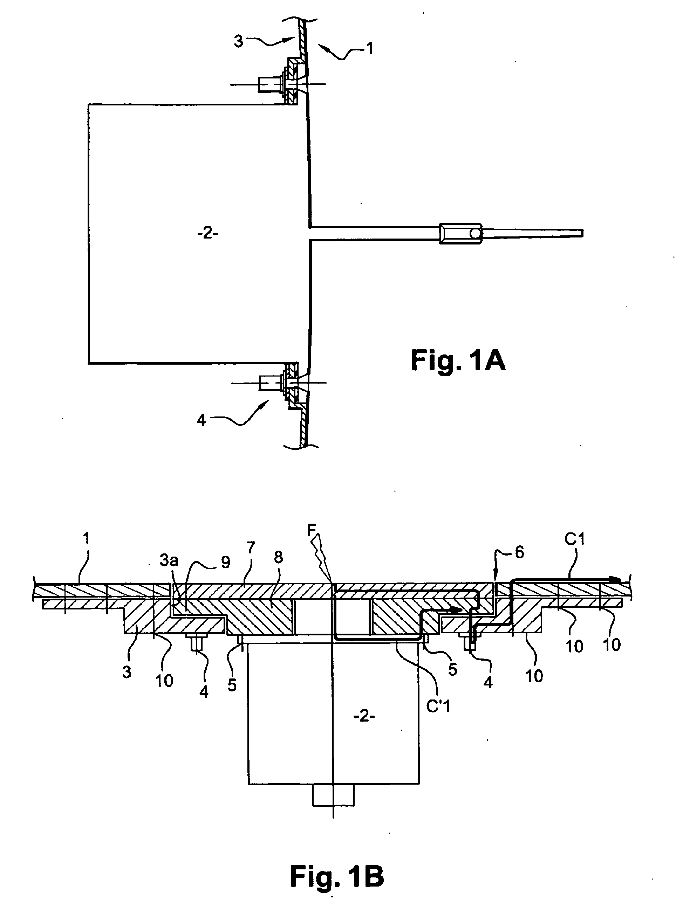

On a représenté, sur les figures 1A et 1B, un exemple d'équipement avionique installé sur la peau externe d'un aéronef à structure métallique. Cet équipement avionique est, par exemple, une sonde 2 montée avec une plaque aérodynamique 7 destinée à obturer l'orifice 6 et à assurer une continuité du profil de l'aéronef. La sonde 2 est fixée sur la peau métallique 1 de l'aéronef au moyen d'écrous à rivet flottants 4 et de plaques de renforcement 3 et 8. Parmi les plaques de renforcement, il y a une première plaque métallique 8, appelée plaque intermédiaire, et une seconde plaque métallique 3, appelée renfort ou doubler. Plus précisément, la sonde 2 est fixée sur la plaque intermédiaire 8, dont le rôle est d'assurer une démontabilité de la sonde 2 par l'extérieur de l'aéronef. La plaque intermédiaire 8 est elle-même fixée sur le doubler 3, dont le rôle est de renforcer l'orifice structural 6 par lequel traverse la sonde 2. Le doubler est placé sous la peau externe 1. Il a une forme en escalier. La plaque intermédiaire 8 a une forme complémentaire du doubler 3. Elle est imbriquée entre le doubler 3, la sonde 2 et la plaque aérodynamique 7.

Dans cet exemple, la sonde 2 est maintenue sur la plaque intermédiaire 8 par des vis métalliques 5. La plaque aérodynamique 7 est fixée par des vis métalliques 9 sur la plaque intermédiaire 8. Le doubler 3 est quant à lui riveté sur la peau métallique 1 de l'aéronef. Le doubler 3 est, par ailleurs fixé sur la peau métallique 1 par des vis 10. De cette façon, la sonde est « métallisée » à la peau de l'aéronef, c'est-à-dire qu'elle forme, avec le doubler, la peau, les plaques métalliques, les vis métalliques et les écrous flottants, un ensemble continu métallique, donc électriquement conducteur.

On comprend donc que, dans cet exemple, toute la structure externe de l'aéronef, de la sonde jusqu'à la peau, est métallisée. De cette façon, si la sonde est frappée par la foudre F, comme schématisé sur la figure 1 B, le courant électrique généré par la foudre va suivre un cheminement correspondant aux chemins C1 et C1' tracés et fléchés sur la figure 1 B. Par exemple, si la sonde reçoit un courant de foudre F, ce courant va passer par deux chemins possibles :
- soit par C1, c'est-à-dire par la plaque aérodynamique 7, puis les vis de fixation 9, la plaque intermédiaire 8, les écrous flottants 4, le doubler 3 et finalement par les vis 10 jusque dans la peau métallique 1 ;
- soit par C1', c'est-à-dire par la plaque aérodynamique 7, la sonde 2, les vis 5, la plaque intermédiaire 8, les écrous flottants 4, le doubler 3 et les vis 10 et enfin la peau métallique 1.

Le courant de foudre est ainsi drainé par les pièces métalliques situées à proximité de la sonde vers peau externe métallique de l'aéronef, de sorte que très peu du courant électrique est injecté à l'intérieur de l'aéronef.

Cependant, les aéronefs à structure métallique présentent l'inconvénient d'être lourds car la totalité de la structure est métallique, avec des panneaux métalliques au moins partiellement superposés pour permettre leur assemblage par des jonctions métalliques, ce qui constitue des surépaisseurs métalliques, donc lourdes. Pour diminuer la masse structurelle d'un aéronef, les constructeurs aéronautiques ont cherchés à remplacer certains éléments métalliques par des éléments en matériaux composites. Ils ont remplacés, en particulier, une partie de la structure métallique des aéronefs par un équivalent en matériau composite. Ainsi, grand nombre d'aéronefs actuels ont une partie de leur structure en matériau composite et, notamment, leur peau externe. En effet, les matériaux composites ayant l'avantage d'être relativement légers par rapport au métal, la masse totale d'un aéronef à structure composite est significativement allégée par rapport à celle d'un aéronef classique. En outre, les aéronefs à structure composite ont l'avantagé de nécessiter moins de contrôles pendant leur vie car leur structure ne se corrode pas.

Les parties en matériau composite de l'aéronef sont généralement réalisées à partir de nappes de fibres sèches pré-enduites d'une résine thermodurcissable. Les nappes de fibres pré-énduites sont placées dans un moule puis chauffées. Sous l'effet de la chaleur, la résine polymérise, permettant au renfort fibreux de conserver la forme du moule. Après refroidissement, le moule est retiré.

Toutefois, avec une structure en matériau composite, la métallisation des équipements avioniques n'est pas assurée par la peau elle-même. En effet, on comprend bien que le principe de métallisation des équipements avioniques sur une peau métallique ne peut pas être appliqué sur un avion en matériau composite puisque la peau en matériau composite n'est pas électriquement conductrice. Les constructeurs aéronautiques ont donc cherché à métalliser l'équipement électronique avec la structure de l'aéronef. Pour cela, sur certains types d'aéronef, en particuliers les hélicoptères, une couche de métal déployé est placée au-dessus de la peau en matériau composite.

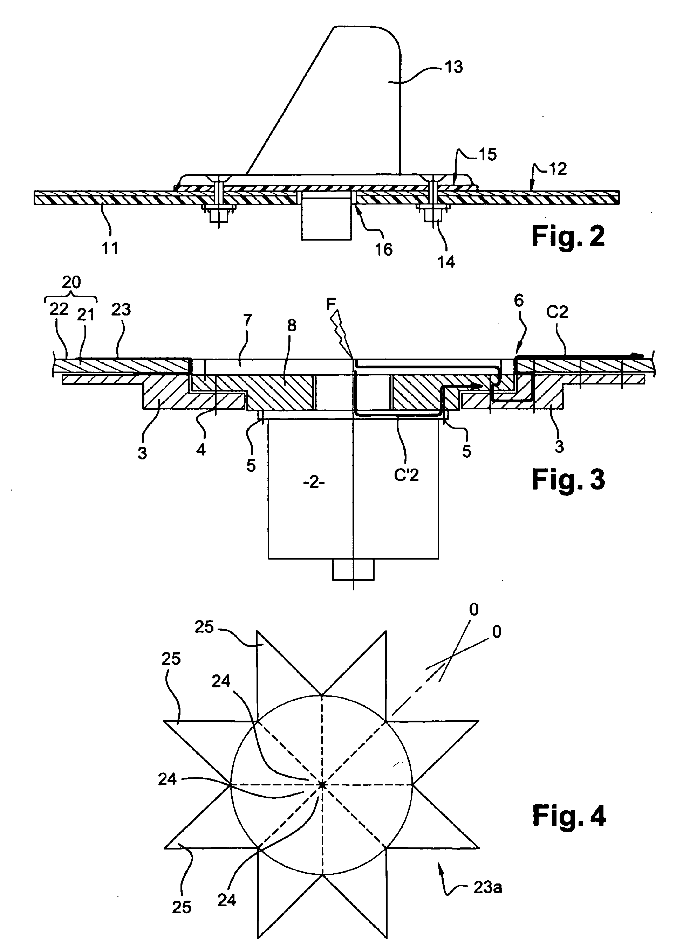

Sur la figure 2, on a représenté un exemple d'une structure d'aéronef en matériau composite et métal déployé. Cette structure comporte une peau externe en matériau composite 11 à l'extérieure de laquelle est placée une couche de métal déployé 12, appelée également ECF pour Expanded Copper Foil, ou une couche de grillage métallique. Dans la suite de la description, on parlera de métal déployé, étant entendu qu'il peut également s'agir de grillage métallique.

On appelle « métal déployé » une plaque métallique, par exemple en cuivre, percée d'une multitude d'orifices puis étirée de façon à former une sorte de grille. Ce métal déployé est étalé sur la structure en matériau composite, formant ainsi une couche de métal déployé. Ce métal déployé peut être drapé en même temps que la peau composite, lors de la fabrication de la structure de l'aéronef. Dans ce cas, le métal déployé est moulé avec les plis de carbone de la structure en matériau composite. Ce métal déployé est ajouté pour drainer les courants électriques générés par la foudre, de manière à assurer la même fonction que la peau d'un aéronef métallique en cas de foudre.

Comme expliqué précédemment, il est impératif de limiter l'injection du courant de foudre au réseau métallique intérieur de l'aéronef. En effet, ce réseau métallique intérieur assure des fonctions de référence électrique et de retour de courant des équipements. Il faut donc limiter l'injection des courants de foudre à l'intérieur de l'avion pour éviter de créer des surtensions et endommager les équipements.

Dans cet exemple, l'équipement avionique 13, par exemple une antenne, est monté à l'intérieur d'un orifice 16 réalisé dans la peau externe 11. L'équipement avionique 13 est fixé sur la peau externe 11 au moyen d'écrous à rivet flottants 14.

Dans une telle structure, l'équipement avionique est métallisé « face-à-face » avec le métal déployé. En effet, la métallisation entre la couche de métal déployé 12 et l'équipement avionique 13 est obtenue par un contact plan sur plan des deux éléments. Or, ce contact plan sur plan entraîne des inconvénients.

En effet, comme expliqué précédemment, l'une des surfaces en face à face n'est pas plane. Il faut donc généralement une pièce intermédiaire, comme un joint d'étanchéité, qui gêne le passage électrique. Il en résulte un contact non fiable et un risque de corrosion qui peut gêner le passage électrique et conduire à la dégradation de la protection contre la foudre. Ce risque est élevé pour les raisons suivantes :
- il est difficile de garantir une étanchéité durable entre l'équipement électronique et la peau du fait de la courbure du fuselage ;
- il existe des difficultés pour maîtriser, sur de grandes surfaces, le couple galvanique entre les matériaux (notamment l'aluminium et le carbone). En effet, le traitement de ce couple galvanique nécessite des éléments isolants ou semi-conducteurs pour assurer l'étanchéité, qui sont incompatibles avec les exigences de protection contre les effets directs de la foudre, à savoir une surface de contact minimale métal/métal de 400 mm² et une résistance électrique de 5 milliohms entre l'équipement et la couche de métal déployé.

Or, en cas de mauvaise métallisation de l'assemblage, le courant de foudre passerait dans l'équipement avionique puis serait évacué par le câble électrique et le tuyau pneumatique connectés audit équipement. Les risques seraient alors, d'une part, d'endommager l'équipement et, d'autre part, d'endommager les équipements électriques ou électromécaniques connectés aux extrémités des câbles électriques.

La structure de la figure 2 présente également l'inconvénient de ne pas pouvoir réutiliser les équipements des programmes précédents. En effet, les équipements avioniques qualifiés pour un avion métallique ne peuvent pas être réutilisés sur un fuselage composite car le dispositif de métallisation est modifié.

Un autre inconvénient encore concerne la maintenance en coût et en temps de réparation. En effet, la réparation de la protection contre la foudre entre l'équipement électronique et la structure de l'aéronef nécessite le démontage de l'équipement, ce qui entraîne un temps de réparation important et donc un coût d'immobilisation important.

### Exposé de l'invention

L'invention a justement pour but de proposer un système de drainage pour aéronef en matériau composite qui permet de drainer le courant électrique généré par la foudre dans la couche de métal déployé.

En effet, il est donc indispensable que les équipements avioniques montés sur la peau de l'aéronef soient métallisés avec la couche de métal déployé afin que le courant de foudre puisse être drainé par le maillage métallique extérieur à la peau pour ne pas pénétrer dans le réseau intérieur de l'aéronef. Le système de drainage de l'invention garantit une très bonne continuité électrique, avec des surfaces de contact suffisantes entre l'équipement et le métal déployé, tout en respectant des exigences aérodynamiques contraignantes telles que le désaffleurement entre l'équipement avionique et la peau-avion.

De façon plus précise, l'invention concerne un système de drainage d'un courant de foudre produit par une décharge orageuse sur un équipement avionique installé sur une peau externe d'un aéronef, ladite peau externe étant réalisée dans un matériau composite recouvert d'une couche de métal déployé et comportant un orifice dans lequel est placée une plaque aérodynamique recouvrant l'équipement avionique, ladite plaque aérodynamique étant fixée sur la peau externe au moyen d'un doubler,
caractérisé en ce qu'il comporte au moins une plaque métallique entourant au moins partiellement la plaque aérodynamique et montée de façon à assurer une continuité électrique entre le doubler et la couche de métal déployé afin d'assurer un drainage du courant de foudre dans la couche de métal déployé.

L'invention peut comporter une ou plusieurs des caractéristiques suivantes :
- la plaque métallique est une plaque en métal déployé.
- la plaque en métal déployé est agencée de façon à couvrir au moins partiellement à la fois une face supérieure de la peau externe et une face inférieure de ladite peau externe.
- la plaque en métal déployé est partiellement recouverte d'une plaque annulaire en titane ou en cuivre.
- la plaque métallique est une plaque en titane moulée avec la peau externe.
- la plaque en titane est fixée sur le doubler au moyen de vis métalliques.
- la plaque en métal déployé est pré-imprégnée de résine et fixée sur la peau externe par chauffage.
- il comporte au moins une cale pelable métallique placée entre la plaque métallique et la peau externe pour corriger un desaffleurement aérodynamique entre la surface supérieure de la peau externe et l'équipement aérodynamique.

L'invention concerne également un procédé d'installation du système de drainage décrit précédemment. Ce procédé comporte les opérations suivantes :
- réalisation d'un orifice dans la peau externe de l'aéronef,
- installation, autour d'au moins une partie de cet orifice, d'une plaque métallique,
- fixation de cette plaque métallique sur la peau externe et sur un doubler, et
- installation d'un équipement avionique dans l'orifice.

L'invention concerne également un aéronef caractérisé en ce qu'il comporte un système de drainage tel que décrit précédemment.

### Brève description des dessins

Les figures 1A et 1B représentent un exemple de système de drainage du courant de foudre sur un aéronef à structure métallique.
La figure 2 représente un exemple de système de drainage du courant de foudre, sur un aéronef à structure composite, avec une métallisation face-à-face.
La figure 3 représente un exemple de système de drainage du courant de foudre, sur un aéronef à structure composite, selon un premier mode de réalisation de l'invention.
La figure 4 représente un exemple de plaque métallique selon le premier mode de réalisation de l'invention.
Les figures 5A, 5B, 5C représentent un autre exemple de plaque métallique selon le premier mode de réalisation de l'invention.
La figure 6 représente un exemple de système de drainage du courant de foudre, sur un aéronef à structure composite, selon un deuxième mode de réalisation de l'invention.
La figure 7 représente un exemple de plaque métallique selon le deuxième mode de réalisation de l'invention.
La figure 8 représente un exemple de système de drainage du courant de foudre, sur un aéronef à structure composite, selon un troisième mode de réalisation de l'invention.
Les figures 9A et 9B représentent un exemple de plaque métallique selon le troisième mode de réalisation de l'invention.

### Description détaillée de modes de réalisation de l'invention

Dans le système de drainage de l'invention, on installe une plaque métallique, conductrice d'électricité, au moins partiellement autour de la plaque aérodynamique. Cette plaque métallique est montée de façon à assurer un contact électrique entre le doubler et le métal déployé de la peau-avion de façon à permettre une continuité électrique entre l'équipement avionique et le métal déployé. Cette continuité électrique permet d'assurer l'évacuation du courant de foudre vers la couche de métal déployé.

Cette plaque métallique peut se présenter sous plusieurs formes. Dans un premier mode de réalisation de l'invention, représenté sur la figure 3, la plaque métallique est une plaque en métal déployé. Plus précisément, cette figure 3 représente un exemple d'installation d'un équipement avionique sur une structure d'aéronef en matériau composite, selon un premier mode de réalisation. Dans cet exemple, l'équipement avionique, appelé aussi équipement électronique, est une sonde anémométrique 2.

Dans ce mode de réalisation, la plaque de métal déployé 23 est installée partiellement autour de l'orifice 6 de passage de la sonde 2. Cette plaque de métal déployé 23 est placée de façon à entourer la peau-avion 20 sur toute son épaisseur. Comme représenté sur la figure 3A, la plaque de métal déployé 23, appelé aussi ECF additionnel, est appliquée sur la surface extérieure de la peau-avion 20, au-dessus de la couche de métal déployé 22 recouvrant le matériau composite 21. On appelle surface extérieure, ou surface supérieure, de la peau-avion, la surface de la peau située en extérieure de l'aéronef, par opposition à la surface intérieure, ou surface inférieure. La plaque de métal déployé 23 est appliquée également sur les parois de l'orifice 6 et sur la surface intérieure de la peau-avion 20. Ainsi, au voisinage de l'orifice 6, la peau-avion 20 se trouve en sandwich dans la plaque de métal déployé 23.

Dans ce mode de réalisation, la plaque de métal déployé 23 est, de préférence, pré-imprégnée d'une résine apte à se polymériser à la peau-avion sous l'effet d'un chauffage à 180 degrés, pendant 2 heures, sous vide. Il est à noter que d'autres types de résines peuvent être utlisées qui polymérisent à 80 °C, pendant 2 heures, sous vide.

Il est envisageable également d'utiliser une plaque de métal déployé sec. Dans ce cas, il faut appliquer un film de résine, puis le métal déployé et mettre l'ensemble à chauffer sous pression.

Pour fabriquer le système de drainage selon ce premier mode de réalisation, la peau-avion 20 fabriquée en matériaux composites selon des techniques classiques est percée d'un orifice 6 pour permettre le passage de la sonde 2. Une plaque de métal déployé, pré-imprégnée, est placée autour de l'orifice 6 puis appliquée sur les parois dudit orifice puis sous l'orifice. La plaque de métal déployé recouvre ainsi la surface extérieure de la peau-avion et sa surface intérieure. Un tapis chauffant porté à environ 180°C est ensuite installé sur cette plaque en métal déployé pour en assurer la polymérisation.

De façon plus détaillée, une opération de ponçage peut être effectuée, avant d'installer la plaque de métal déployé 23, afin d'atteindre le maillage métallique de la couche de métal déployé 22.

La plaque de métal déployé 23 est ainsi en contact surfacique avec la couche de métal déployé 22 de la peau avion. La plaque de métal déployé 23 est également en contact surfacique, à l'intérieur de l'aéronef, avec le Doubler 3.

Dans ce mode de réalisation, la métallisation de l'installation est donc assurée via la peau-avion 20. En effet, la sonde 2 est métallisée avec le doubler 3, comme expliqué précédemment pour l'aéronef à structure métallique, par l'intermédiaire de la plaque intermédiaire 8, de la plaque aérodynamique 7 et des vis et écrous 5 et 4. Le doubler 3 est métallisé par contact avec la plaque de métal déployé 23, elle-même métallisée par contact avec la couche de métal déployé 22 de la peau-avion.

Sur la figure 3, on a représenté des exemples de cheminements C2 et C2' de la foudre dans le système de drainage qui vient d'être décrit. On voit ainsi que si la foudre F atteint la sonde 2, alors le courant de foudre va passer par deux chemins possibles :
- soit par C2, c'est-à-dire par la plaque aérodynamique 7, puis les vis de fixation, la plaque intermédiaire 8, les écrous flottants 4, le doubler 3 et finalement par la plaque de métal déployé 23 et enfin la couche de métal déployé 22 de la peau-avion 20 ;
- soit par C2', c'est-à-dire par la plaque aérodynamique 7, la sonde 2, les vis 5, la plaque intermédiaire 8, les écrous flottants 4, le doubler 3 la plaque de métal déployé 23 et enfin la couche de métal déployé 22 de la peau-avion 20.

Quel que soit le cheminement du courant de foudre, ce dernier est drainé vers la peau de l'aéronef, évitant tout risque d'introduction dudit courant dans le réseau de l'aéronef.

Dans une variante de ce mode de réalisation, la plaque de métal déployé a la forme d'une étoile 23a dont le centre est découpé, comme représenté sur la figure 4. Dans cet exemple de plaque de métal déployé 23a, les pointes externes 25 de l'étoile sont appliquées sur la surface extérieure de la peau-avion et les pointes internes 24, une fois découpées, sont rabattues sur la surface intérieure de la peau-avion. De cette façon, une fois cette plaque de métal déployé 23a pliée et chauffée, le métal déployé est réparti régulièrement tout autour de l'orifice 6 dans lequel la sonde 2 est installée.

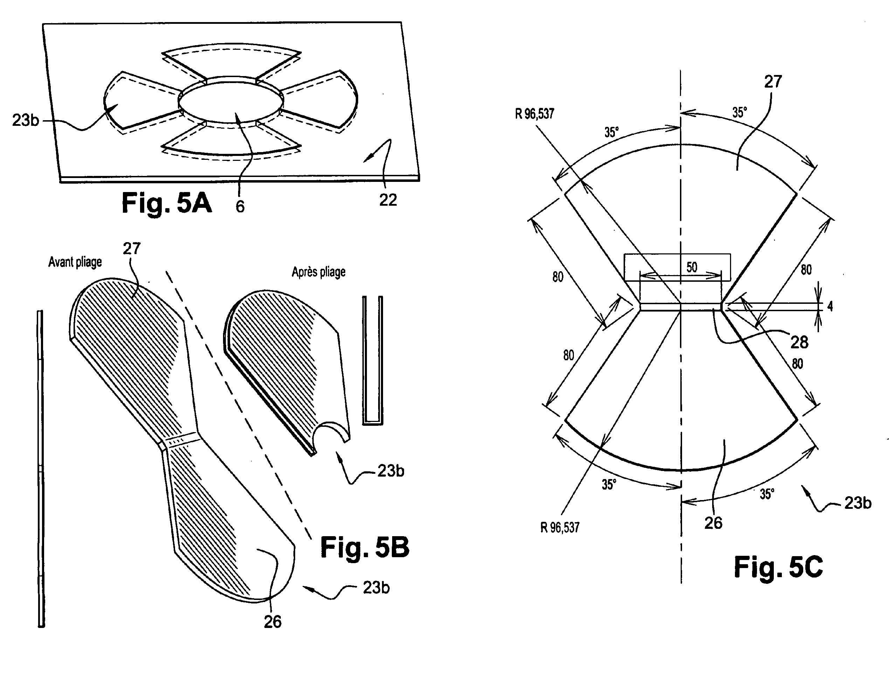

Dans une seconde variante de ce mode de réalisation, la plaque de métal déployé 23 a une forme différente de celle de la figure 4. Dans cette variante, la plaque de métal déployé 23 est constituée d'une pluralité de patchs individuels placés les uns à proximité des autres. On appelle patch de métal déployé, une forme prédécoupée destinée à être pliée en son centre avant d'être appliquée sur la peau-avion. Sur les figures 5A à 5C, on a représenté un exemple de tels patchs. Sur la figure 5B, on a représenté un exemple de patch, avant et après pliage. Chaque patch 23b a une forme de double pale plane, dont une moitié 27 est destinée à être appliquée sur la surface supérieure de la peau-avion 20 et l'autre moitié 26 sur la face inférieure de ladite peau-avion.

Comme montré sur la figure 5A, chaque patch 23b est placé autour de l'orifice 6 de passage de la sonde puis plié vers l'intérieur de l'aéronef afin que le patch épouse une partie de la circonférence de l'orifice 6. Plusieurs patchs sont placés autour de l'orifice, par exemple 4, comme représenté sur la figure 5A.

Chacun des patchs est installé, comme dans la première variante, avec un ponçage de la couche superficielle de la peau-avion. L'ensemble des patchs est ensuite chauffé au moyen d'un tapis chauffant.

Généralement, sur un aéronef, une section de 400 mm² de section de passage du courant de foudre doit être respectée pour des raisons de sécurité. Afin de respecter cette exigence, le dimensionnement d'un patch peut être celui représenté sur la figure 5C. Par exemple, chaque patch 23b peut avoir une section centrale 28 de 50 mm par 4 mm (50 mm étant la largeur) et des cotés de 80 mm, avec une ouverture de 70°.

Dans ce cas, pour un orifice 6 de 120 mm de diamètre, on peut utilisé, comme montré sur la figure 5A, quatre patchs 23b. Au bord de l'orifice 6, on a ainsi, pour chaque patch, 50 mm x 4 mm = 200 mm² de section de passage du courant. Avec quatre patchs, on a ainsi 800 mm² de passage du courant.

Si l'épaisseur de la peau-avion diminue à 2 mm, les quatre patchs offrent 400 mm² de passage. Si l'épaisseur de peau diminue de 1,5 mm, la largeur de la section 28 du patch devra être de 70 mm ; il est possible aussi, dans ce cas, d'ajouter un patch supplémentaire de section égale à 50 mm.

Un tel dimensionnement des patchs permet, non seulement de respecter les 400 mm² de section de passage du courant, mais aussi d'appliquer les patchs de métal déployé au bord de l'orifice 6 sans créer de pli. En effet, pour ne pas créer de perturbations aérodynamiques, il est nécessaire qu'il n'y ait aucun pli au niveau du pliage des patchs. Pour éviter la création de plis lors de l'application des patchs de métal déployé au bord de l'orifice, il est préférable que la section centrale de chaque patch ne dépasse pas 50mm.

Il est à noter que, sur les aéronefs, il existe des contraintes aérodynamiques relatives au désaffleurement des équipements avioniques par rapport à la peau-avion. Pour l'ensemble des sondes anémométriques et détecteurs de conditions givrantes à installer, le désaffleurement aérodynamique entre l'équipement et la peau-avion ne doit pas varier de plus de 0,2 mm à 0,8 mm. En effet, le désaffleurement acceptable entre l'équipement avionique et la structure de l'aéronef dépend du type de l'équipement lui-même. Par exemple, pour des sondes de pression statique, le désaffleurement acceptable est compris entre 0,2 et 0,25 mm. Ce désaffleurement dépend de la performance de l'équipement lui-même.

Dans le mode de réalisation qui vient d'être décrit, l'épaisseur de la peau-avion a l'avantage de rester constante, ce qui permet de respecter les contraintes de désaffleurement (désaffleurement acceptable d'environ 0,2 mm, dans le cas d'une sonde anémométrique).

En outre, dans ce mode de réalisation, la plaque de métal déployé est localisée et installée après fabrication de la peau et avant installation de l'équipement avionique, ce qui permet de conserver le même équipement avionique et le même processus d'installation que pour les aéronefs à structure métallique.

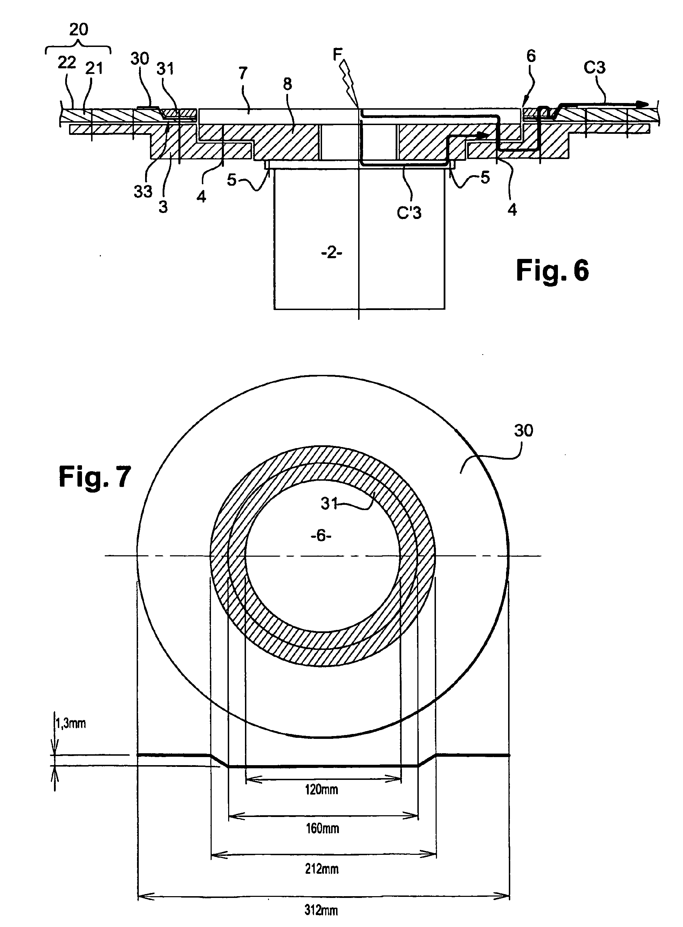

Dans un deuxième mode de réalisation de l'invention, la plaque métallique est constituée d'une couronne de métal déployé et d'une plaque annulaire en titane ou en cuivre. Un exemple de ce mode de réalisation est représenté sur la figure 6.

Comme dans le premier mode de réalisation, la peau-avion 20 est tout d'abord fabriquée, puis percée d'un orifice 6.

Dans ce deuxième mode de réalisation, une couronne de métal déployé 30, pré-imprégnée, est ensuite installée autour de l'orifice 6, sur la surface extérieure de la peau-avion 20. Un tapis chauffant est ensuite placé sur cette couronne 30 pour assurer sa polymérisation.

Une plaque annulaire 31, en titane ou en cuivre, est ensuite placée en contact avec la couronne de métal déployé 30. On décrira, par la suite, le mode de réalisation avec une plaque en titane, étant entendu que la plaque 31 peut aussi être en cuivre. Cette plaque de titane 31 est installée au-dessus de la section centrale de la couronne de métal déployé 30. Un exemple de l'ensemble de la plaque métallique selon ce second mode de réalisation est représenté sur la figure 7. Cet ensemble comporte une première couronne 30 en métal déployé. Au centre de cette couronne, c'est-à-dire sur la zone de petite section de la couronne 30, est placée la plaque annulaire de titane 31. Cette plaque de titane 31 recouvre en partie la couronne de métal déployé 30. A titre indication, pour respecter la section de passage du courant de foudre de 400 mm², la couronne 30 peut avoir un diamètre extérieur de 312 mm et un diamètre intérieur de 120 mm ; la plaque de titane 31 peut avoir un diamètre extérieur de 212 mm et un diamètre intérieur de 120 mm.

Dans ce mode de réalisation, la plaque annulaire en titane 31 est fixée sur le Doubler 3 par des vis 32. Ces vis métallisent le doubler 3 à la plaque en titane 31. La plaque en titane est métallisée à la couronne en métal déployé. Ainsi, tout l'assemblage est métallisé à la couche de métal déployé de la peau-avion.

Sur la figure 6, on a représenté des exemples de cheminements C3 et C3' de la foudre dans le système de drainage qui vient d'être décrit. On voit ainsi que si la foudre F atteint la sonde 2, alors le courant de foudre va passer par deux chemins possibles :
- soit par C3, c'est-à-dire par la plaque aérodynamique 7, la plaque intermédiaire 8, les écrous flottants 4, le doubler 3, les vis 32, puis la plaque de titane 31 et enfin la couronne de métal déployé 30 et la peau-avion 20 ;
- soit par C3', c'est-à-dire par la plaque aérodynamique 7, la sonde 2, les vis 5, la plaque intermédiaire 8, les écrous flottants 4, le doubler 3, les vis 32, la plaque de titane 31 et enfin la couronne de métal déployé 30 et la peau-avion 20.

Quel que soit le cheminement du courant de foudre, ce dernier est drainé vers la peau de l'aéronef, évitant tout risque d'introduction dudit courant dans le réseau de l'aéronef.

Dans ce mode de réalisation, pour réaliser le système de drainage du courant de foudre, on creuse la peau-avion 20 autour de la sonde 2 et on découpe la couche de métal déployé 22. On ajoute ensuite une couronne de métal déployé 30 puis une plaque de titane31. On a ainsi tendance à épaissir la peau de l'aéronef en ajoutant la plaque de titane. Pour ne pas avoir un désaffleurement trop important, on a coupé les plis de carbone de la peau-avion 20 au niveau de la plaque annulaire en titane 31. Il est donc nécessaire que la peau, localement, soit renforcée pour tenir les efforts structuraux.

En outre, pour respecter les contraintes de désaffleurement aérodynamique, des cales pelables métalliques 33, par exemple en cuivre, peuvent être installées entre la plaque annulaire en titane 31 et la peau-avion 20, si les moyens de perçage n'offrent pas les tolérances voulues. Ces cales pelables 33 forment un empilement qui permet d'ajuster la hauteur de la plaque titane 31 en retirant des couches de ladite cale pelable afin de limiter le désaffleurement aérodynamique.

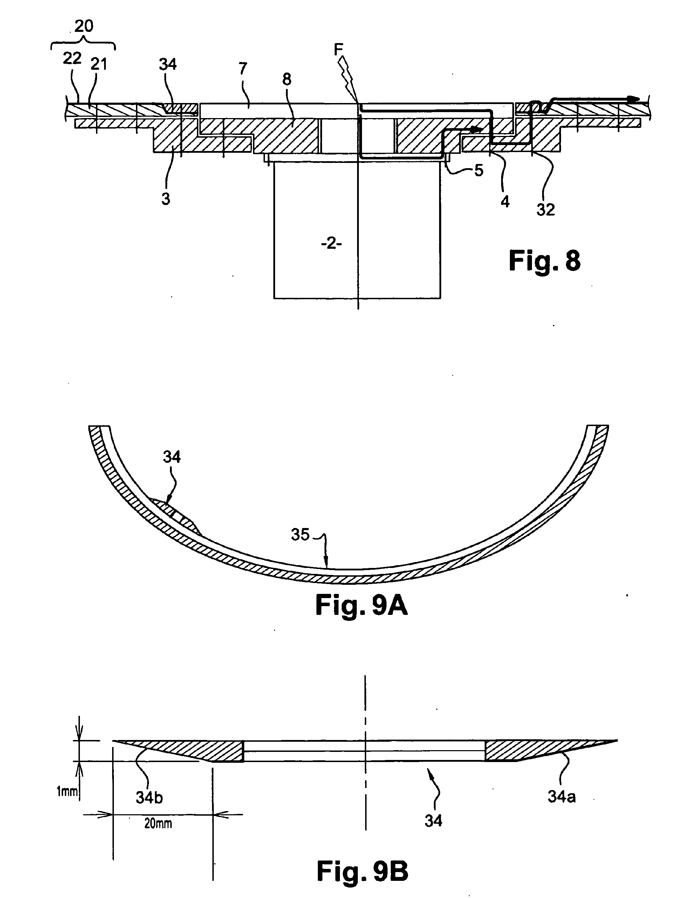

Dans un troisième mode de réalisation du système de drainage de l'invention, la plaque métallique est moulée avec la peau-avion. Ce mode de réalisation est représenté sur les figures 8 et 9. Dans ce mode de réalisation, la peau-avion 20 n'est pas percée dans son épaisseur. Le soyage de la peau prévu pour recevoir la plaque annulaire en titane est effectué lors du drapage de la peau-avion dans le moule de fabrication. L'outillage est alors un moule femelle.

Comme montré sur la figure 8, une plaque annulaire en titane 34 est placée autour de l'orifice 6, directement dans la peau-avion 20. Cette plaque en titane 34 a été préalablement moulée avec la peau-avion 20 de façon à ce que la peau-avion ait une forme adaptée au contour de la plaque en titane 34.

Sur la figure 9A, on a représenté un exemple de moule femelle dans lequel la peau-avion peut être fabriquée. Ce moule femelle incorpore la plaque en titane 34. Une fois que la plaque en titane a été placée dans le moule 35, on place les plis de carbone à l'intérieur du moule de façon à ce que ces plis de carbone prennent la forme du contour de la plaque en titane 34.

La plaque en titane 34 peut être fixée à demeure sur le moule. Dans ce cas, une autre plaque en titane, de forme sensiblement identique, est installée sur la peau-avion avec, si nécessaire, des cales pelables métalliques pour limiter le désaffleurement aérodynamique. Dans ce cas, le principe de montage de la plaque en titane est similaire à celui du second mode de réalisation, la plaque en titane étant fixée sur le doubler 3 au moyen de vis 32.

La plaque en titane 34, utilisée sur le moule lors de la fabrication de la peau-avion, peut être retirée et installée sur ladite peau. Cette variante présente de nombreux avantages :
- la peau-avion est moulée sur la plaque en titane et l'assemblage respecte les exigences aérodynamiques sans avoir à rajouter de cale pelable ; on a directement un affleurement correct entre la peau et la plaque en titane.
- d'un point de vue structural, la tenue de la peau-avion est meilleure car les plis de carbone ne sont pas coupés pour installer la plaque en titane ;
- on a directement une continuité électrique entre la plaque en titane et la couche de métal déployé de la peau-avion ; autrement dit, la couche de métal déployé 22 de la peau-avion 20 est directement en contact avec la plaque en titane 34, ce qui assure un contact électrique moins discontinu que dans les variantes précédentes ;
- il n'y a pas de plaque de métal déployé à rajouter, ce qui simplifie la fabrication du système.

Un exemple de dimensionnement de la plaque en titane 34 est représenté sur la figure 9B. Comme ont le voit sur cette figure, la plaque en titane 34 a des extrémités 34a, 34b qui forment une pente, cette pente permettant d'éviter la formation de bulles lors du drapage de la peau de carbone entre chaque plis. La plaque en titane peut avoir, par exemple, une pente sur 1 mm d'épaisseur et 20 mm de largeur, c'est-à-dire un angle égal à Arc tan (1/20).

## Revendications

1. Équipement avionique comportant un système de drainage d'un courant de foudre produit par une décharge orageuse sur ledit équipement avionique (2) installé sur une peau externe (20) d'un aéronef, ladite peau externe étant réalisée dans un matériau composite (21) recouvert d'une couche de métal déployé (22) et comportant un orifice (6) dans lequel est placée une plaque aérodynamique (7) recouvrant l'équipement avionique (2), ladite plaque aérodynamique étant fixée sur la peau externe au moyen d'un doubler (3) métallique,
**caractérisé en ce qu'**il comporte au moins une plaque métallique (23, 30, 34) entourant au moins partiellement la plaque aérodynamique et montée de façon à assurer une continuité électrique entre le doubler (3) et la couche de métal déployé (22) afin d'assurer un drainage du courant de foudre dans la couche de métal déployé.

2. Équipement avionique selon la revendication 1, **caractérisé en ce que** la plaque métallique est une plaque en métal déployé (23, 30).

3. Équipement avionique selon la revendication 2, **caractérisé en ce que** la plaque en métal déployé (23) est agencée de façon à couvrir au moins partiellement à la fois une face supérieure de la peau externe (20) et une face inférieure de ladite peau externe.

4. Équipement avionique selon la revendication 2, **caractérisé en ce que** la plaque en métal déployé (30) est partiellement recouverte d'une plaque annulaire en titane ou en cuivre (31).

5. Équipement avionique selon la revendication 1, **caractérisé en ce que** la plaque métallique est une plaque en titane (34) moulée avec la peau externe (20).

6. Équipement avionique selon la revendication 4 ou 5, **caractérisé en ce que** la plaque en titane (31, 34) est fixée sur le doubler (3) au moyen de vis métalliques.

7. Équipement avionique selon l'une quelconque des revendications 2 à 4, **caractérisé en ce que** la plaque en métal déployé (23, 30) est pré-imprégnée de résine et fixée sur la peau externe par chauffage.

8. Équipement avionique selon l'une quelconque des revendications 4 à 7, **caractérisé en ce qu'**il comporte au moins une cale pelable métallique (33) placée entre la plaque métallique (30, 34) et la peau externe (20) pour corriger un désaffleurement aérodynamique entre la surface supérieure de la peau externe et l'équipement aérodynamique.

9. Procédé d'installation d'un Équipement avionique selon l'une quelconque des revendications précédentes, **caractérisé en ce qu'**il comporte les opérations suivantes :
- réalisation d'un orifice (6) dans la peau externe (20) de l'aéronef,
- installation, autour d'au moins une partie de cet orifice, d'une plaque métallique (23, 30, 34),
- fixation de cette plaque métallique sur la peau externe et sur un doubler (3), et
- installation d'un équipement avionique (2) dans l'orifice (6).

10. Aéronef, **caractérisé en ce qu'**il comporte un équipement avionique selon l'une quelconque des revendications 1 à 8.

## Claims

1. Avionic equipment comprising a system for dissipating a lightning current produced by a thunderstorm discharge on said avionic equipment (2) installed on an outer skin (20) of an aircraft, said outer skin being made of a composite material (21) covered with a layer of expanded metal (22) and including an orifice (6) in which an aerodynamic plate (7) is positioned, covering the avionic equipment (2), said aerodynamic plate being fastened on the outer skin by a metal doubler (3),
**characterised in that** it comprises at least one metal plate (23, 30, 34) at least partially surrounding the aerodynamic plate and mounted so as to ensure an electric continuity between the doubler (3) and the layer of expanded metal (22) to ensure dissipation of the lightning current in the expanded metal layer.

2. Avionic equipment according to claim 1, **characterised in that** the metal plate is a plate made of expanded metal (23, 30).

3. Avionic equipment according to claim 2, **characterised in that** the plate made of expanded metal (23) is arranged so as to cover at least partially both an upper face of the outer skin (20) and a lower face of said outer skin.

4. Avionic equipment according to claim 2, **characterised in that** the plate made of expanded metal (30) is partially covered with a ring-shaped plate made of titanium or copper (31).

5. Avionic equipment according to claim 1, **characterised in that** the metal plate is a plate made of titanium (34) cast with the outer skin (20).

6. Avionic equipment according to claim 4 or 5, **characterised in that** the plate made of titanium (31, 34) is fastened onto the doubler (3) by metal screws.

7. Avionic equipment according to any one of claims 2 to 4, **characterised in that** the plate made of expanded metal (23, 30) is pre-impregnated with resin and fastened on the outer skin by heating.

8. Avionic equipment according to any one of claims 4 to 7, **characterised in that** it comprises at least one metal laminated shim (33) positioned between the metal plate (30, 34) and the outer skin (20) to correct an aerodynamic non-alignment between the upper surface of the outer skin and the aerodynamic equipment item.

9. A method for installing avionic equipment according to any one of the previous claims, **characterised in that** it comprises the following operations:
- implementing an orifice (6) in the outer skin (20) of the aircraft,
- installing, around at least one part of this orifice, a metal plate (23, 30, 34),
- fastening this metal plate onto the outer skin and onto a doubler (3), and
- installing avionic equipment (2) in the orifice (6).

10. An aircraft, **characterised in that** it comprises avionic equipment according to any one of claims 1 to 8.

## Patentansprüche

1. Avionikgerät mit einem System zur Abführung eines durch eine Gewitterentladung auf ein Luftfahrzeug erzeugten Blitzstroms, wobei das besagte Avionikgerät (2) auf einer Außenhaut (20) eines Luftfahrzeugs installiert ist, und die besagte Außenhaut aus einem Verbundmaterial (21) gefertigt ist, das mit einer Schicht aus Streckmetall (22) überzogen ist, und eine Öffnung (6) umfasst, in der eine Aerodynamikplatte (7) angebracht ist, die das Avionikgerät (2) abdeckt, und die besagte Aerodynamikplatte (7) mit einer metallischen Verstärkungsplatte (3) auf der Außenhaut befestigt ist,
**dadurch gekennzeichnet, dass** es zumindest eine Metallplatte (23, 30, 34) umfasst, die die Aerodynamikplatte zumindest teilweise umgibt, und derart montiert ist, dass sie für einen Stromdurchgang zwischen der metallischen Verstärkungsplatte (3) und der Schicht aus Streckmetall (22) sorgt, um für eine Abführung des Blitzstroms in die Schicht aus Streckmetall (22) zu sorgen.

2. Avionikgerät nach Anspruch 1, **dadurch gekennzeichnet, dass** die Metallplatte eine Platte aus Streckmetall (23, 30) ist.

3. Avionikgerät nach Anspruch 2, **dadurch gekennzeichnet, dass** die Platte aus Streckmetall (23) derart angeordnet ist, dass sie zumindest teilweise sowohl eine Oberseite der Außenhaut (20) und eine Innenseite der besagten Außenhaut abdeckt.

4. Avionikgerät nach Anspruch 2, **dadurch gekennzeichnet, dass** die Platte aus Streckmetall (30) teilweise durch eine Ringplatte aus Titan oder aus Kupfer (31) überdeckt ist.

5. Avionikgerät nach Anspruch 1, **dadurch gekennzeichnet, dass** die Metallplatte eine Platte aus Titan (34) ist, die gemeinsam mit der Außenhaut (20) ausgeformt ist.

6. Avionikgerät nach Anspruch 4 oder 5, **dadurch gekennzeichnet, dass** die Platte aus Titan (31, 34) mit Metallschrauben auf der metallischen Verstärkungsplatte (3) befestigt ist.

7. Avionikgerät nach irgendeinem der Ansprüche 2 bis 4, **dadurch gekennzeichnet, dass** die Platte aus Streckmetall (23, 30) mit einem Harz vorimprägniert ist, und durch Erhitzen auf der Außenhaut befestigt wird.

8. Avionikgerät nach irgendeinem der Ansprüche 4 bis 7, **dadurch gekennzeichnet, dass** es zumindest eine abziehbare metallische Abstimmscheibe (33) umfasst, die zwischen der Metallplatte (30, 34) und der Außenhaut (20) angeordnet wird, um einen aerodynamischen Überstand zwischen der Oberfläche der Außenhaut und dem aerodynamischen Gerät auszugleichen.

9. Installationsverfahren für ein Avionikgerät nach irgendeinem der vorherigen Ansprüche, **dadurch gekennzeichnet, dass** es die folgenden Vorgänge umfasst:
- Die Erstellung einer Öffnung (6) in der Außenhaut (20) des Luftfahrzeugs,
- Die Installation einer Metallplatte (23, 30, 34) um zumindest einen Teil dieser Öffnung herum,
- Die Befestigung dieser Metallplatte auf der Außenhaut und auf einer metallischen Verstärkungsplatte (3), und
- Die Installation eines Avionikgerätes (2) in der Öffnung (6).

10. Luftfahrzeug, **dadurch gekennzeichnet, dass** es ein Avionikgerät nach irgendeinem der Ansprüche 1 bis 8 umfasst.
